# EUROPEAN PATENT APPLICATION

(11) **EP 4 819 008 A1**
(43) Date of publication of application: **07.10.2026**
(21) Application number: 25742003.4
(22) Date of filing: 17.01.2025
(51) Int. Cl.: G06Q 10/30, G06Q 50/04

(54) **RECYCLED ARTICLE MANAGEMENT SYSTEM**

(30) Priority: 19.01.2024 JP 2024006512
(71) Applicant: Hitachi Construction Machinery Co., Ltd., Tokyo 110-0015 (JP)
(72) Inventor: TERASHIMA, Akira, Tokyo 110-0015 (JP); SATO, Jumpei, Tokyo 110-0015 (JP)
(74) Representative: Manitz Finsterwald Patent- und Rechtsanwaltspartnerschaft mbB
(86) International application number: PCT/JP2025/001236
(87) International publication number: WO 2025/154778

(57) **Abstract**

A remanufactured product management system according to the present invention is a remanufactured product management system including a first terminal provided at a service base for a machine, a second terminal provided at a remanufacturing base for a part of the machine, and a server. When a part of the machine is replaced, the second terminal transmits part information relating to a part remanufactured at the remanufacturing base to the server, the server generates remanufactured product management information based on the part information received, the first terminal obtains information relating to part replacement from the part removed from the machine and the part to be installed in the machine and transmits the obtained information relating to part replacement to the server, the server updates the remanufactured product management information based on the information relating to part replacement received from the first terminal, and transmits guidance for determining whether the part removed from the machine can be remanufactured to the first terminal, the first terminal generates one of a return report or a scrap report of the part removed from the machine based on a selection result in the guidance received from the server and transmits the generated return report or scrap report to the server, and the server updates the remanufactured product management information based on the information relating to part replacement received from the first terminal, and information included in the return report or the scrap report.

## Description

### Technical Field

The present invention relates to a remanufactured product management system for reusing parts contained in machines as remanufactured products.

### Background Art

In recent years, mechanisms for reusing (recycling) products have been attracting attention in order to realize a circular society. There are several forms of reuse, including reusing the product as is, disassembling the product into its parts and reusing each of the disassembled parts, and restoring the product to like-new condition and reusing it (remanufacturing). When a product is a part of a machine, promoting reuse of the product requires centralized management of the processes of removing the product from the machine, collecting it, remanufacturing the collected product, and installing the remanufactured product again to the machine (these processes are also collectively referred to as the circulation process).

To solve this problem, for example, the technology described in Patent Literature 1 could be used. This technology associates a product ID with the product to be reused, registers it in a management database, and manages the process from the collection of the target product until its reshipment.

### Citation List

### Patent Literature

Patent Literature 1: JP 2002-197180 A

### Summary of Invention

### Technical Problem

However, in the case of the technology described in Patent Literature 1, the information registered in the management database in association with the product ID is limited to the contents of the sorting process performed on the collected target product (whether to reuse the target product as is, or to disassemble the target product into its parts and reuse each of the disassembled parts), and the model number (manufacturing number) of the equipment in which the target product is installed when the target product is reused as is. As a result, there is an issue in that the circulation process of products remanufactured (remanufactured products) cannot be centrally managed. In addition, remanufactured products may be remanufactured and reused not only once but multiple times, and therefore the number of remanufacturing cycles and the remanufacturing history thereof must also be managed during the circulation process.

In view of the above circumstances, the present invention aims to provide a remanufactured product management system that can centrally manage the circulation process of remanufactured products.

### Solution to Problem

To solve the above problems, a remanufactured product management system according to the present invention is a remanufactured product management system including a first terminal provided at a service base for a machine, a second terminal provided at a remanufacturing base for a part of the machine, and a server. When a part of the machine is replaced, the second terminal transmits part information relating to a part remanufactured at the remanufacturing base to the server, the server generates remanufactured product management information based on the part information received, the first terminal obtains information relating to part replacement from the part removed from the machine and the part to be installed in the machine and transmits the obtained information relating to part replacement to the server, the server updates the remanufactured product management information based on the information relating to part replacement received from the first terminal, and transmits guidance for determining whether the part removed from the machine can be remanufactured to the first terminal, the first terminal generates one of a return report or a scrap report of the part removed from the machine based on a selection result in the guidance received from the server and transmits the generated return report or scrap report to the server, and the server updates the remanufactured product management information based on the information relating to part replacement received from the first terminal, and information included in the return report or the scrap report.

### Advantageous Effects of Invention

According to the present invention, the circulation process of remanufactured products can be centrally managed.

Further features related to the present invention will become apparent from the description of the present specification and the accompanying drawings. In addition, the problems, configurations, and effects other than those described above will become apparent from the following description of the embodiments.

### Brief Description of Drawings

Fig. 1 is a schematic configuration diagram showing an overall image of a remanufactured product management system according to Example of the present invention.
Fig. 2 is a block diagram showing the functions of the remanufactured product management system according to Example.
Fig. 3 is a flowchart showing processes executed by the remanufactured product management system.
Fig. 4 is a diagram showing an example of a part replacement registration screen displayed on an agent terminal.
Fig. 5 is a diagram showing an example of a screen display of input guidance displayed on the agent terminal.
Fig. 6 is a diagram showing an example of a screen display of a shipping inspection displayed on a remanufacturing factory terminal.
Fig. 7 is a diagram showing an example of a screen display of remanufactured product management information displayed on the agent terminal or the remanufacturing factory terminal.

### Description of Embodiments

Hereinafter, an embodiment of a remanufactured product management system according to Example of the present invention will be described with reference to the drawings. In the description of the drawings, the same elements are given the same reference numerals, and redundant descriptions are omitted. Furthermore, in the present invention, a "remanufactured product" refers to a part that has been removed and collected for replacement during machine maintenance work, for example, and has been restored to like-new condition. Parts removed from a machine due to replacement include not only parts that have developed a defect, but also parts that have passed a specified period of use or parts that are replaced preventively before a defect occurs, and also parts that have been remanufactured and used multiple times. In this Example, the parts removed from a machine due to replacement are designated as parts that are candidates for remanufacturing. Accordingly, in the following description, a part removed from a machine may be referred to as a "remanufacturing candidate part."

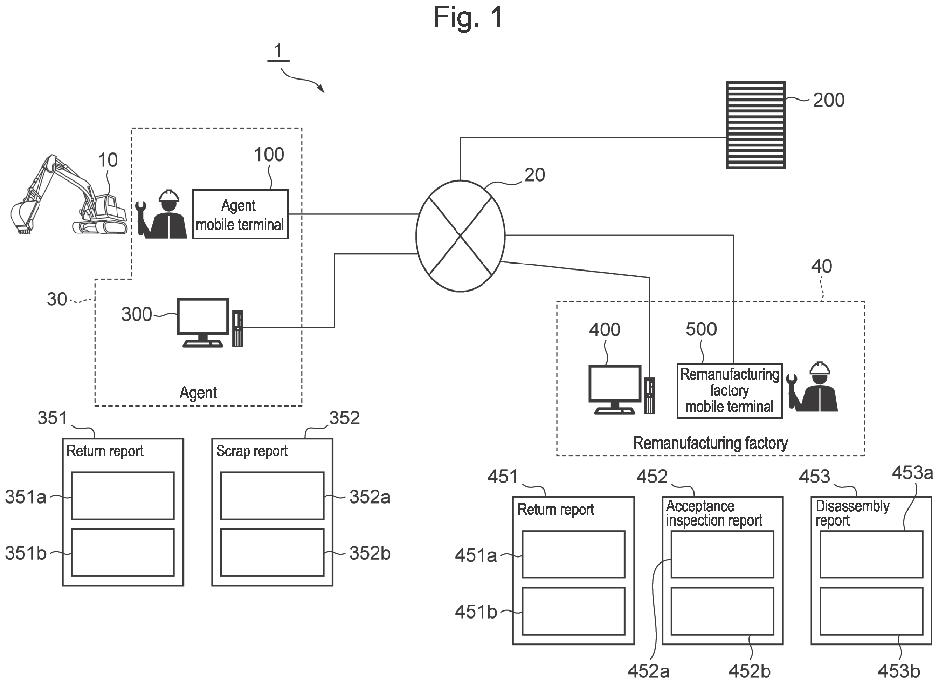

Fig. 1 is a schematic configuration diagram showing an overall image of a remanufactured product management system. As shown in Fig. 1, a remanufactured product management system 1 according to this Example includes an agent terminal 300 disposed at an agent 30, which is a service base that provides services such as sales and maintenance of a machine 10 (for example, construction machines such as hydraulic excavators), an agent mobile terminal 100 held by service personnel who perform maintenance work such as inspection of the machine 10, a server 200 that manages information on each part of the machine 10, a remanufacturing factory terminal 400 disposed at a remanufacturing factory 40, which is a remanufacturing base that remanufactures parts of the machine 10, and a remanufacturing factory mobile terminal 500 held by a worker at the remanufacturing factory 40. The agent mobile terminal 100, the agent terminal 300, the remanufacturing factory terminal 400, and the remanufacturing factory mobile terminal 500 are each connected to the server 200 via a network 20 so as to be able to communicate with each other.

The agent terminal 300 corresponds to the "first terminal" recited in the claims, and is composed of a computer equipped with, for example, a CPU (Central Processing Unit) and memory. The agent terminal 300 has functions to support the maintenance work of service personnel, manage input to the agent mobile terminal 100, and create various reports, and the like.

The agent mobile terminal 100 may be, for example, a smartphone, a tablet terminal, a mobile phone, or a PDA (Personal Data Assistant), and is carried by the service personnel at the agent 30 and used when performing maintenance on the machine 10. Note that this agent mobile terminal 100 also corresponds to the "first terminal" in the claims.

The remanufacturing factory terminal 400 corresponds to the "second terminal" recited in the claims, and is composed of a computer equipped with a CPU (Central Processing Unit) and memory, for example. The remanufacturing factory terminal 400 has functions to support the work of workers in the remanufacturing factory, manage input to the remanufacturing factory mobile terminal 500, and create various reports, and the like.

The remanufacturing factory mobile terminal 500 has the same structure as the above-described agent mobile terminal 100 and may be, for example, a smartphone, a tablet terminal, a mobile phone, or a PDA (Personal Data Assistant), and is carried by the worker at the remanufacturing factory 40 and used when performing acceptance inspection work and disassembly work of remanufacturing candidate parts, as well as shipping inspection work of remanufactured products. Note that this remanufacturing factory mobile terminal 500 also corresponds to the "second terminal" in the claims.

The server 200 is installed in the head office, branch office, factory or management center of the manufacturer of the machine 10. The server 200 is connected to the agent mobile terminal 100, the agent terminal 300, the remanufacturing factory terminal 400, and the remanufacturing factory mobile terminal 500 via the network 20 through wireless communication, stores and manages information transmitted from the agent mobile terminal 100, the agent terminal 300, the remanufacturing factory terminal 400, and the remanufacturing factory mobile terminal 500, and provides the information in response to requests from these terminals. For example, the server 200 stores and manages inspection reports transmitted from the agent mobile terminal 100, reports transmitted from the agent terminal 300 and the remanufacturing factory terminal 400, and information on accepted parts and information on disassembled parts transmitted from the remanufacturing factory mobile terminal 500.

The server 200 is configured as a microcomputer that combines, for example, a CPU (Central Processing Unit) that executes calculations, a ROM (Read Only Memory) as a secondary storage device that stores programs for the calculations, and a RAM (Random Access Memory) as a temporary storage device that stores the calculation progress and temporary control variables, and performs each process by executing the stored programs.

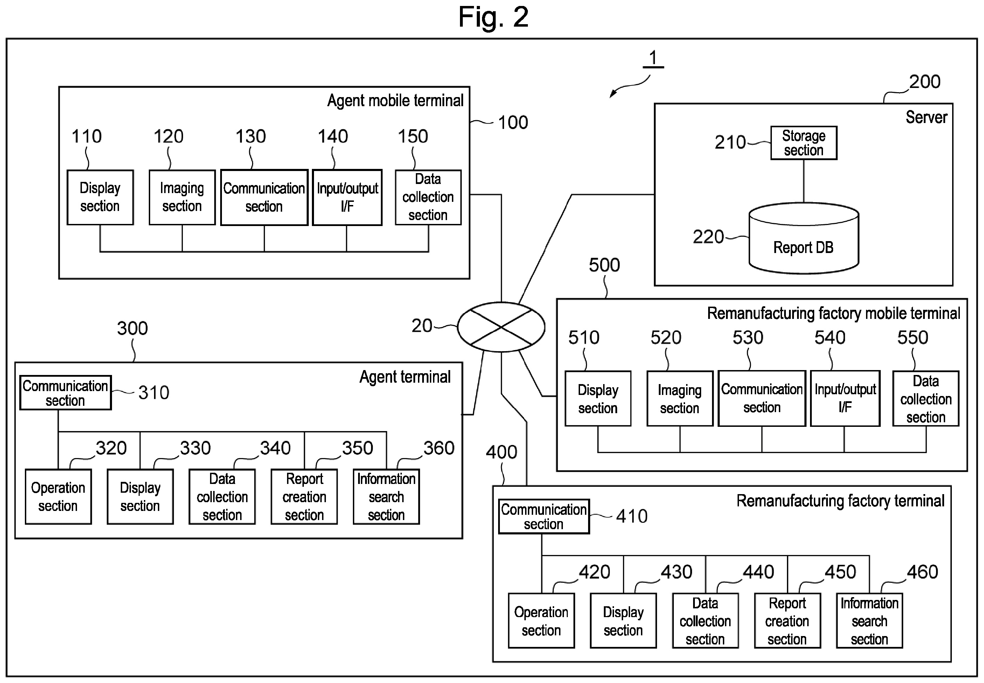

Next, the functions of each terminal described above will be described. Fig. 2 is a block diagram showing the functions of the remanufactured product management system 1.

As shown in Fig. 2, the agent mobile terminal 100 includes a display section 110, an imaging section 120, a communication section 130, an input/output I/F (input/output interface) 140, and a data collection section 150.

The display section 110 is, for example, a display, and displays various information such as the inspection items of the machine 10. The imaging section 120 is, for example, a camera built into the agent mobile terminal 100, and generates image data of a captured subject. The communication section 130 is, for example, a wireless device for connection to the network 20, and transmits information entered by the service personnel to the server 200, and receives information such as e-mails from the server 200.

The input/output I/F 140 is configured, for example, by a touch panel displayed on the display section 110 of the agent mobile terminal 100, a separately connected keyboard, or by buttons or the like provided in the agent mobile terminal 100. For example, when a part is replaced during inspection work of the machine 10, the service personnel can create an inspection report including the inspection date and time, the inspection details, and the information about the part removed due to the replacement (that is, the remanufacturing candidate part) through input operations on the input/output I/F 140. Once created, the inspection report is transmitted to the server 200. The service personnel can also input to the input/output I/F 140 the result of determination as to whether the remanufacturing candidate part can be reused.

The data collection section 150 collects information about any machine 10 from the server 200 in response to input operations on the input/output I/F 140. The service personnel can check whether there is data about a specific machine 10 via the data collection section 150 and can also obtain that data. For example, when performing inspection work of a machine 10, the service personnel input an identification number for identifying the machine 10 to be inspected to the input/output I/F 140, and obtain the part replacement history of the machine 10 from the server 200 via the data collection section 150, thereby understanding the part replacement status of the machine 10.

Furthermore, through the operation input to the input/output I/F 140, the inspection details and the information about a remanufacturing candidate part (if any part replacement) can be added to the part replacement history of the machine 10 obtained from the server 200 to create an inspection report. The inspection report includes image data showing the inspection status and image data of the remanufacturing candidate part, or the like. Once created, the inspection report is transmitted to the server 200 via the communication section 130 and the network 20. The server 200 stores the received inspection report in a storage section 210 (described later).

As shown in Fig. 2, the agent terminal 300 includes a communication section 310, an operation section 320, a display section 330, a data collection section 340, a report creation section 350, and an information search section 360.

The communication section 310 is, for example, a wireless device for connection to the network 20, and transmits information entered via the operation section 320 and reports created by the report creation section 350 to the server 200, and receives information such as e-mails from the server 200. The operation section 320 is, for example, a keyboard provided in the agent terminal 300.

The display section 330 is, for example, a display, and displays information transmitted from the server 200. The display section 330 may also be configured to display a touch panel. In this way, it is possible to perform various input operations via the touch panel displayed on the display section 330.

The data collection section 340 collects information about any machine 10 from the server 200 in response to input operations on the operation section 320. For example, when an inspection report for a specific machine 10 is to be obtained, the manager of the agent or the like can enter the identification number of the machine 10 using the operation section 320 and obtain the inspection report for the machine 10 from the server 200 via the communication section 310 and the operation section 320. Note that the obtained inspection report for the specific machine 10 is displayed on the display section 330.

The report creation section 350 creates each report based on the result of determination as to whether the remanufacturing candidate part can be remanufactured, which is described in the inspection report of the machine 10. Specifically, the report creation section 350 creates a return report 351 when it is determined that the remanufacturing candidate part can be remanufactured, and creates a scrap report 352 when it is determined that the remanufacturing candidate part cannot be remanufactured.

The return report 351 is a report for returning a remanufacturing candidate part to the remanufacturing factory 40 when it is determined that the remanufacturing candidate part can be remanufactured. The scrap report 352 is a report for discarding a remanufacturing candidate part when it is determined that the remanufacturing candidate part cannot be remanufactured. Note that once created, these reports are transmitted to the server 200 via the communication section 310 and the network 20. The information search section 360 searches for information related to remanufactured products registered in the server 200 based on specified conditions.

As shown in Fig. 1, the return report 351 and the scrap report 352 created by the report creation section 350 have image data areas 351a and 352a for displaying the overall image and details of the remanufacturing candidate part, and text areas 351b and 352b for displaying related information such as machine identification information and return category (in the case of the return report 351). Note that since the determination result itself as to whether or not remanufacturing is possible can be substituted by the type of report issued, such description may be omitted.

As shown in Fig. 2, the server 200 includes the storage section 210. The storage section 210 stores information transmitted from the agent mobile terminal 100, the agent terminal 300, the remanufacturing factory terminal 400, and the remanufacturing factory mobile terminal 500. In addition, the storage section 210 includes a report DB (Data Base) 220 that accumulates reports transmitted from the agent terminal 300 and the remanufacturing factory terminal 400.

As shown in Fig. 2, the remanufacturing factory terminal 400 includes a communication section 410, an operation section 420, a display section 430, a data collection section 440, a report creation section 450, and an information search section 460. These functional sections, except for the report creation section 450, have the same functions as the functional sections of the agent terminal 300, so a description thereof will be omitted. The report creation section 450 of the remanufacturing factory terminal 400 creates an acceptance inspection report 452 for the remanufacturing candidate part based on the actual remanufacturing candidate part sent to the remanufacturing factory terminal 400 and image data of the remanufacturing candidate part included in the return report 351 created by the agent terminal 300 or image data of the remanufacturing candidate part included in a return report 451 created by the remanufacturing factory terminal 400 itself.

Since the part is typically composed of multiple smaller parts, the remanufacturing factory terminal 400 further disassembles a part determined to be remanufacturable (that is, remanufactured product) into smaller parts, and manages information related to the disassembled smaller parts. In this case, after creating the acceptance inspection report 452 described above, the report creation section 450 further creates a disassembly report 453 for disassembling the remanufacturing candidate part into smaller parts that make up the remanufacturing candidate part. The disassembly report 453 includes the usage history of the remanufacturing candidate part.

As shown in Fig. 1, the return report 451, the acceptance inspection report 452, and the disassembly report 453 created by the report creation section 450 have image data areas 451a, 452a, and 453a for displaying the overall image and details of the remanufacturing candidate part, and text areas 451b, 452b, and 453b for displaying related information such as machine identification information and return category (in the case of the return report 451). Note that in this Example, the information search sections 360, 460 are configured to be provided in the remanufacturing factory terminal 400 and the agent terminal 300, but the information search sections may also be provided in the remanufacturing factory mobile terminal 500 and the agent mobile terminal 100.

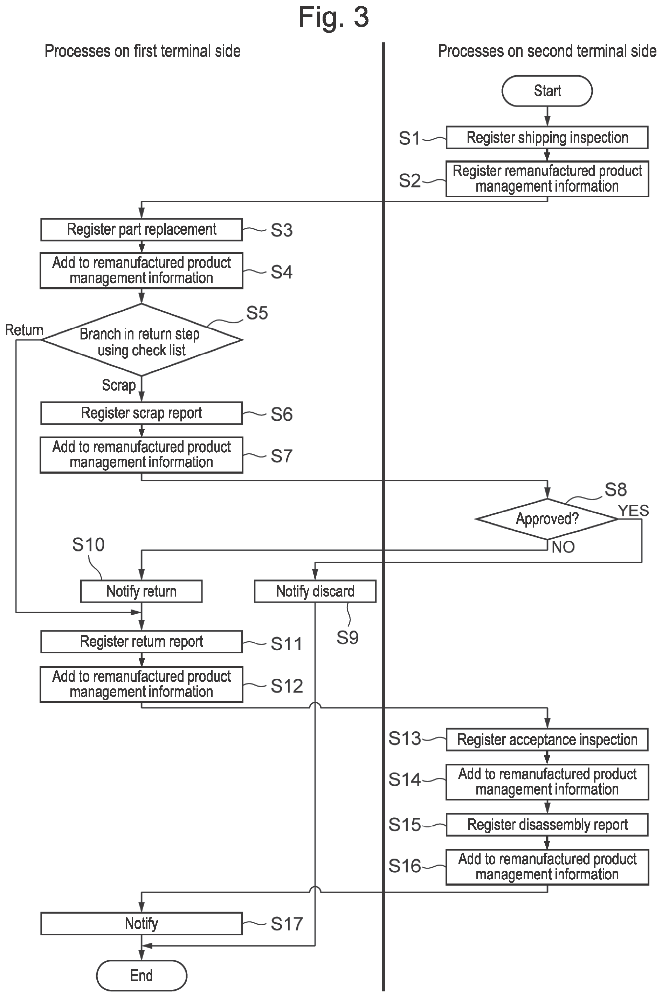

Next, the processes executed by the remanufactured product management system according to this Example will be described with reference to Fig. 3. The process flow is divided into the processes executed on the first terminal (the agent terminal 300 or the agent mobile terminal 100) side and the processes executed on the second terminal (the remanufacturing factory terminal 400 or the remanufacturing factory mobile terminal 500) side. In addition, the process executed by the server 200 upon receiving some information from each terminal is also treated as the process executed on each terminal side.

First, in step S1, a shipping inspection is performed when a remanufactured product is shipped from the remanufacturing factory 40 to the agent 30. The shipping inspection is a final check of the quality, condition, and the like of the remanufactured product before shipping, as described later. The result is entered into the second terminal by a worker at the remanufacturing factory 40, and the "shipping inspection" result is transmitted to the server 200. Next, in step S2, the server 200 registers the data related to the shipping inspection received from the second terminal in the report DB 220, and remanufactured product management information is generated. This remanufactured product management information is generated for each remanufactured product, and has the role of managing the circulation process of each remanufactured product by associating the report numbers and their contents, such as "part replacement," "return report," and "scrap report," which are processes after the "shipping inspection," with the serial number (manufacturing number) that is the information for identifying the remanufactured product.

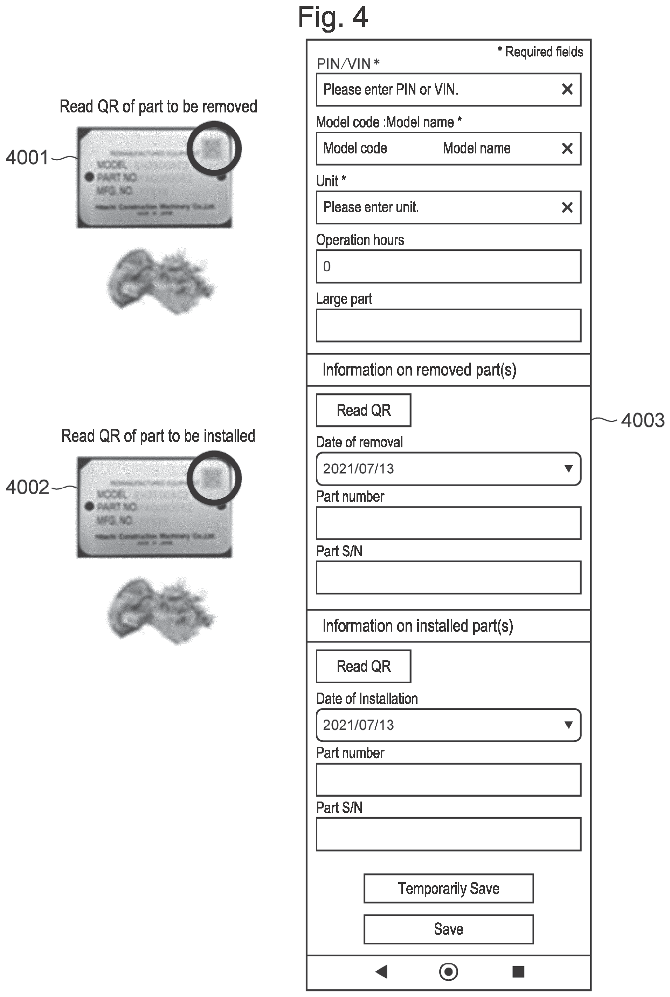

Next in step S3, when replacing a part of the machine 10 with a remanufactured product, the agent's service personnel perform "part replacement registration" from the first terminal and register it in the report DB 220. In part replacement registration, a code (for example, QR code: registered trademark) printed on the part to be replaced or on the packaging material of the part to be replaced is read. As shown in Fig. 4, the service personnel read the codes of both the part to be removed and the part to be installed, and transmit information contained in the read codes from the first terminal to the server 200. Note that the replacement part registered in step S3 is a remanufactured product that has already been remanufactured once or multiple times and is different from the part registered for the shipping inspection in step S1. When part replacement registration is performed in step S3, in step S4, the server 200 updates the remanufactured product management information, where part replacement information such as the replacement date and time for the replaced part is added to the remanufactured product management information.

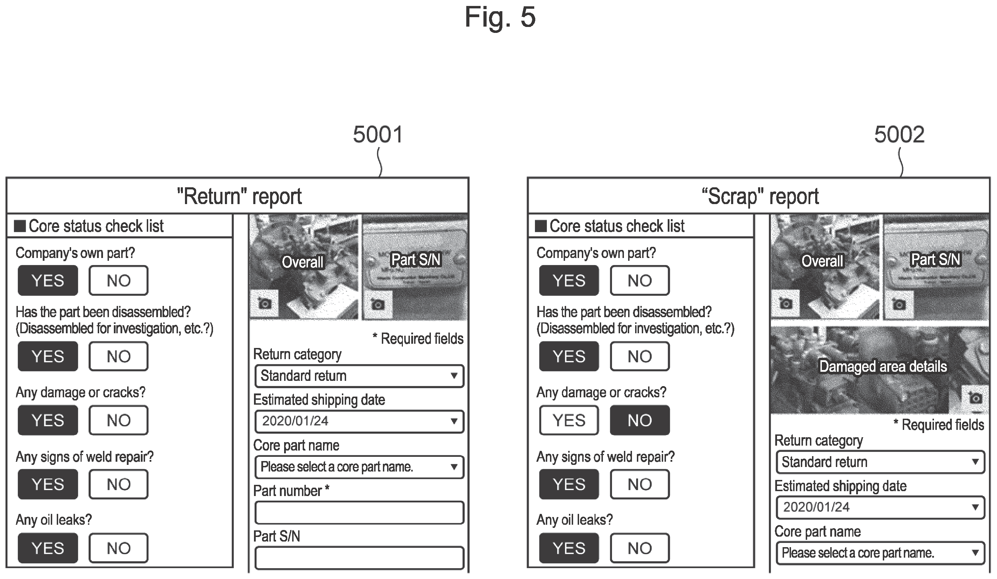

In step S5, input guidance for determining whether the removed part can be remanufactured is transmitted from the server 200 to the first terminal. The service personnel operate the first terminal and select check items included in the input guidance displayed on the terminal as shown in Fig. 5. Depending on the result, a "scrap report" or a "return report" is generated. If a "scrap report" is generated as a result of input contents, the process proceeds to S6. If a "return report" is generated as a result of input contents, the process proceeds to step S11.

In step S6, when the "scrap report" is registered in the report DB 220 from the first terminal, in step S7, the server 200 adds the contents to the remanufactured product management information. When the "scrap report" is added in step S7, the validity thereof is determined on the second terminal side in step S8 (approval process). In a storage section (not shown) of the second terminal, for example, part information including image data of all parts installed in each machine is accumulated, and further, the determination criteria for each part regarding approval are also stored. For example, the second terminal compares the image data included in the obtained scrap report with the accumulated part information to determine whether to approve or reject the remanufacturing candidate part as a scrap. For the determination method using information such as image data, a technology already known in the art can be used. If the scrap report is approved in the approval process, the process proceeds to step S9. If the scrap report is rejected in the approval process, the process proceeds to step S10.

If the scrap report is approved in the approval process, the first terminal is notified in step S9 that "discard" of the part has been fixed, and the process ends. In accordance with this notification, the agent discards the part. If the scrap report is rejected in the approval process, the first terminal is notified in step S10 that "return" of the part has been fixed. In accordance with this notification, the part is returned from the agent 30 to the remanufacturing factory 40 as a remanufacturing candidate part. Note that at this time, a return slip containing a QR code associated with information for identifying the remanufacturing candidate part is printed at the agent 30, and enclosed with the remanufacturing candidate part to be returned. In step S11, when the return report is fixed, the first terminal registers the "return report" in the report DB 220.

When the "return report" is registered in step S11, the server 200 adds the contents to the remanufactured product management information in step S12. In step S13, information related to an "acceptance inspection" (whether there is any sign of disassembly or modification from the time of shipment to the time of return, or the like) is registered on the second terminal. Specifically, the worker at the remanufacturing factory 40 first accesses the server 200 by reading the QR code on the return slip enclosed with the returned remanufacturing candidate part with a terminal equipped with a scanning function, and then obtains the return report 351 or 451 of the remanufacturing candidate part. Next, by comparing the image data contained in the obtained return report 351 or 451 with the actual remanufacturing candidate part sent, the worker inspects whether the sent remanufacturing candidate part matches what is described in the return report 351 or 451, and inputs the inspection result as information on an accepted part via an input/output I/F 540 of the remanufacturing factory mobile terminal 500. Furthermore, the worker takes an image of the remanufacturing candidate part with an imaging section 520 of the remanufacturing factory mobile terminal 500 and attaches it as the information on the accepted part. In step S14, the server 200 adds the information related to the "acceptance inspection" to the remanufactured product management information.

In step S15, information relating to a "disassembly report" is registered on the second terminal. Specifically, the worker at the remanufacturing factory 40 disassembles the remanufacturing candidate part into smaller parts, and for each of the disassembled smaller parts, attribute information such as a management number is input as disassembled part information via the input/output I/F 540 of the remanufacturing factory mobile terminal 500. Furthermore, for each of the smaller parts disassembled by the worker, the worker takes each image with the imaging section 520 and attaches it as disassembled part information. In step S16, the information relating to the "disassembly report" is added to the remanufactured product management information at the remanufacturing factory 40. Finally, in step S17, the first terminal is notified that the registration process at the remanufacturing factory 40 has been completed, and the process ends.

According to this Example, first, the shipping inspection is registered on the second terminal, and remanufactured product management information is generated based on the result. The remanufactured product management information is then updated according to the processes executed on the first terminal and the second terminal. This makes it possible to centrally manage the circulation process of remanufactured products.

Fig. 4 is a diagram showing an example of a part replacement registration screen displayed on the agent terminal 300 in this Example. When the QR (see a reference numeral 4001) of the part to be removed or the QR (see a reference numeral 4002) of the part to be installed is read, a screen 4003 is displayed. When performing part replacement registration, at least the "parts No." "serial (parts Serial No.)," "operation hours (on the vehicle body)," and "date of removal and date of installation" are required to be entered among the information displayed on the screen 4003. When service personnel log into the information input screen on the agent terminal 300, candidates for the target machine are displayed on the display section 330. When the target machine is specified via the operation section 320, the "operation hours (on the vehicle body)" is obtained from the server 200. Note that the "operation hours (on the vehicle body)" and the "date of removal and date of installation" can be specified arbitrarily.

A product label containing information identifying the manufacturer and the part (such as "part number" and "serial (manufacturing number)" information) is attached to the replacement part. This information is also printed, for example, as a QR code. In this Example, the reading (scanning) function of the agent mobile terminal 100 is used to perform the part replacement registration. By reading the codes printed on the parts, the "part number" and "serial (manufacturing number)" of the part to be removed and the part to be installed are entered into the information input screen.

Specifically, the service personnel use the agent mobile terminal 100 to read the code when removing/installing the part. Note that the order of reading does not matter. For example, the QR code may be read when removing the part, and then the QR code may be read when installing the part. Also, related information may be obtained manually by manual input. Although QR codes are printed on parts that are the company's own products, the display of identification information for other companies' products varies, so the QR code is not necessarily printed. For this reason, the reading function may not be supported. In this case, manual input makes it possible to reliably obtain replacement information for other companies' products.

The part operation time is determined based on the difference between the "operation time (on the vehicle body)" at the time of previous installation and the "operation time (on the vehicle body)" at the time of current removal. In addition, the cumulative number of days is determined based on the difference between the "installation date and time" at the time of previous installation and the "installation date and time" at the time of current removal.

Fig. 5 is a diagram showing an example of a screen display of input guidance displayed on the first terminal in this Example. A screen display 5001 is an example of a screen display when making a return report, and a screen display 5002 is an example of a screen display when making a scrap report.

When replacing a part, the service personnel at the agent 30 create report data indicating whether the part can be used as a remanufactured product. The creation of report data indicating whether the part to be replaced can be remanufactured is left to the subjective judgment of the service personnel who create it. In other words, even if some service personnel determine that the part can be remanufactured, other service personnel may determine that the part cannot be remanufactured. For this reason, it is preferable to be able to easily create report data based on uniform and unified criteria that allow service personnel to easily determine whether the part can be remanufactured.

Then, as shown in Fig. 5, simple check items are provided in the input guidance, and depending on the selection result, a "return report" indicating that the part can be remanufactured or a "scrap report" indicating that the part cannot be remanufactured is created. Since the inspection criteria differ depending on the part, the input guidance is displayed according to the part to be inspected, for example, whether the inspection target is a pump, a cylinder, or a center joint. In other words, check items are displayed according to the part specified when creating the report data. Note that the check items are not limited to a binary selection format and may be changed as desired. In Fig. 5, in the screen display 5001 when making a return report, "Yes" is selected for all items indicating whether the part includes abnormality, but in the screen display 5002 when making a scrap report, "No" is selected for the item indicating whether there is damage or cracks, and it can be seen that damage or cracks are found in the part.

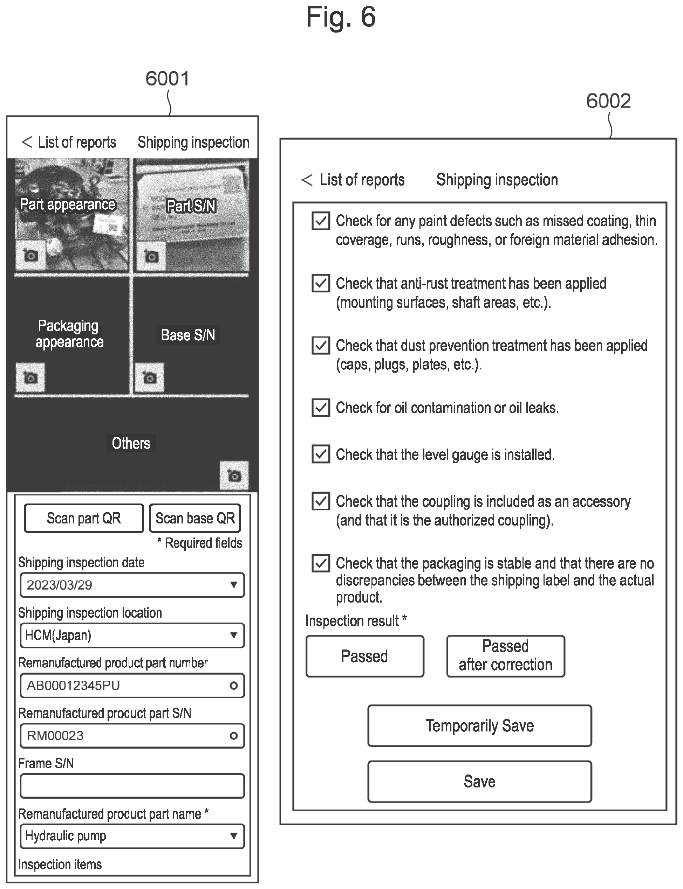

Fig. 6 is a diagram showing an example of a screen display of a shipping inspection displayed on the second terminal in this Example. The shipping inspection is a final check before a remanufactured product is shipped from the factory. Therefore, the input contents on the shipping inspection screen include items related to the final check, such as whether there is any abnormality in appearance, whether any accessory is missing, and the packaging.

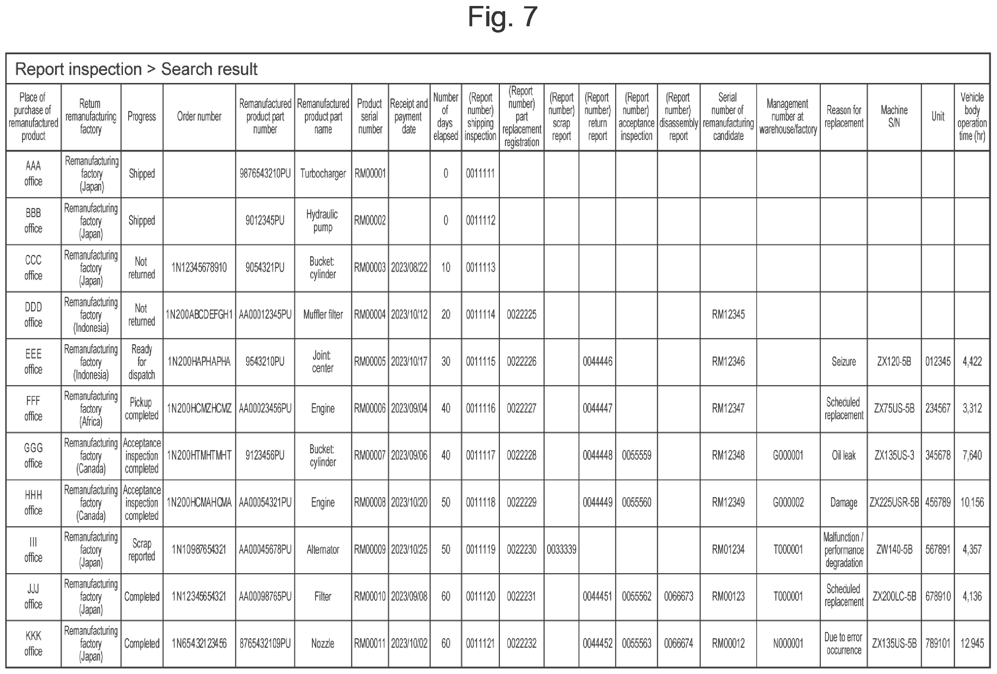

Fig. 7 is a diagram showing an example of a screen display of remanufactured product management information displayed on each terminal in this Example. This screen is a management screen that displays the registration status of information entered from a mobile terminal (shipping inspection, part replacement registration, return report, scrap report, acceptance inspection report, disassembly report) organized by the product serial number of the remanufactured product. Each product serial number is linked to the place of purchase of the remanufactured product, the return remanufacturing factory, the progress, the order number, the remanufactured product part number and the remanufactured product part name, the receipt and payment date, and (if registered) the serial number of remanufacturing candidate, the management number at the warehouse/factory, the reason for replacement, the machine S/N, the unit, and the vehicle body operation time. The progress of each process can be understood at a glance from the registration status of reports for "shipping inspection (shipment from the remanufacturing factory to the agent)", "part replacement registration (part replacement work performed by the agent)", "return report (return from the agent to the remanufacturing factory)", "scrap report (discard at the agent)", "acceptance inspection (acceptance inspection performed at the remanufacturing factory)", and "disassembly report (disassembly and remanufacturing work performed by the remanufacturing factory)". In addition, the place of purchase of the remanufactured product, the return remanufacturing factory, and the progress are also displayed, and the registered information for each process can be confirmed by selecting a report number and calling up each report. In this way, the circulation process from shipping the remanufactured product to collecting it and shipping it again as a remanufactured product can be centrally managed.

The above-described Example of the present invention provides the following operational effects.
(1) The remanufactured product management system according to the present invention is a remanufactured product management system including a first terminal provided at a service base for a machine, a second terminal provided at a remanufacturing base for a part of the machine, and a server, wherein when a part of the machine is replaced, the second terminal transmits part information relating to a part remanufactured at the remanufacturing base to the server, the server generates remanufactured product management information based on the part information received, the first terminal obtains information relating to part replacement from the part removed from the machine and the part to be installed in the machine and transmits the obtained information relating to part replacement to the server, the server updates the remanufactured product management information based on the information relating to part replacement received from the first terminal, and transmits guidance for determining whether the part removed from the machine can be remanufactured to the first terminal, the first terminal generates one of a return report or a scrap report of the part removed from the machine based on a selection result in the guidance received from the server and transmits the generated return report or scrap report to the server, and the server updates the remanufactured product management information based on the information relating to part replacement received from the first terminal, and information included in the return report or the scrap report.
   The above configuration makes it possible to centrally manage the circulation process of remanufactured products.
(2) The information relating to part replacement is generated when reading of a code related to the part removed from the machine and reading of a code related to the part to be installed in the machine are confirmed, and is transmitted from the first terminal to the server. In this way, it is preferable to generate information relating to part replacement at the time when information relating to both the part to be removed and the part to be installed is confirmed.
(3) The first terminal generates one of the return report or the scrap report for each part removed from the machine according to the selection result in the guidance corresponding thereto. The guidance is automatically transmitted from the server, and reports can be easily created by simply making checks.
(4) If it is determined that the part removed from the machine can be remanufactured, the server generates the remanufactured product management information including acceptance inspection items for the part at the remanufacturing base. If the part cannot be remanufactured, the part will not be treated as a remanufactured product, so such a process is preferable.
(5) The second terminal transmits to the server a result of a shipping inspection including information related to a final check before the part remanufactured is shipped as the part information. This makes it easy to check the condition of the part before shipping, which also reduces the effort required for the shipping inspection.

Note that the present invention is not limited to Example described above, and various modifications are possible. For example, Example described above has been described in detail to clearly explain the present invention, and the present invention is not necessarily limited to an embodiment that includes all of the configurations described. It is also possible to replace part of the configuration of one example with the configuration of another example. It is also possible to add the configuration of another example to the configuration of one example. It is also possible to delete part of the configuration of each example, or to add or replace other configurations.

### Reference Signs List

- 10: Machine
- 200: Server
- 300: Agent terminal (first terminal)
- 351, 451: Return report
- 352: Scrap report
- 400: Remanufacturing factory terminal (second terminal)

## Claims

1. A remanufactured product management system comprising a first terminal provided at a service base for a machine, a second terminal provided at a remanufacturing base for a part of the machine, and a server, wherein when a part of the machine is replaced,
the second terminal transmits part information relating to a part remanufactured at the remanufacturing base to the server,
the server generates remanufactured product management information based on the part information received,
the first terminal obtains information relating to part replacement from the part removed from the machine and the part to be installed in the machine and transmits the obtained information relating to part replacement to the server,
the server updates the remanufactured product management information based on the information relating to part replacement received from the first terminal, and transmits guidance for determining whether the part removed from the machine can be remanufactured to the first terminal,
the first terminal generates one of a return report or a scrap report of the part removed from the machine based on a selection result in the guidance received from the server and transmits the generated return report or scrap report to the server, and
the server updates the remanufactured product management information based on the information relating to part replacement received from the first terminal, and information included in the return report or the scrap report.

2. The remanufactured product management system according to claim 1, wherein the information relating to part replacement is generated when reading of a code related to the part removed from the machine and reading of a code related to the part to be installed in the machine are confirmed, and is transmitted from the first terminal to the server.

3. The remanufactured product management system according to claim 1, wherein the first terminal generates one of the return report or the scrap report according to the selection result in the guidance corresponding to each part removed from the machine.

4. The remanufactured product management system according to claim 1, wherein if it is determined that the part removed from the machine can be remanufactured, the server generates the remanufactured product management information including acceptance inspection items for the part at the remanufacturing base.

5. The remanufactured product management system according to claim 1, wherein the second terminal transmits to the server a result of a shipping inspection including information related to a final check before the part remanufactured is shipped as the part information.
